Europäisches Patentamt

European Patent Office

Office européen des brevets

(19)

(11) Publication number: **0 274 565 B1**

## (12) EUROPEAN PATENT SPECIFICATION

(45) Date of publication of patent specification: **22.01.92**   (51) Int. Cl.⁵: **G11B 23/04**, G11B 23/08

(21) Application number: **87110790.0**

(22) Date of filing: **24.07.87**

(54) **Tape cartridge for use in disc drive.**

(30) Priority: **16.01.87 US 3998**

(43) Date of publication of application:
**20.07.88 Bulletin  88/29**

(45) Publication of the grant of the patent:
**22.01.92 Bulletin  92/04**

(84) Designated Contracting States:
**DE FR GB**

(56) References cited:
**EP-A- 0 195 571**
**EP-A- 0 214 820**

(73) Proprietor: **Hewlett-Packard Company**
**Mail Stop 20 B-O, 3000 Hanover Street**
**Palo Alto, California 94304(US)**

(72) Inventor: **Marquez, Robert O.**
**1121 34th Avenue**
**Greeley Colorado 80631(US)**

(74) Representative: **Liesegang, Roland, Dr.-Ing.**
**FORRESTER & BOEHMERT Widenmayer-**
**strasse 4 Postfach 22 01 37**
**W-8000 München 22(DE)**

## Description

This invention relates to a magnetic tape cartridge for transferring data between a length of a tape and a disc drive head in a disc drive according to the first part of claim 1 (EP-A-0 195 571).

Tape storage media are widely used to store large amounts of data that are not required to be rapidly accessed by a computer. Tape media are often used for archival storage and to store a duplicate copy of data in case the original data located in a computer is inadvertently erased or damaged. This second function is referred to as "backup" storage.

Normally, in order to store date on a tape specifically designed apparatus is required. The added expense of acquiring such a tape storage apparatus to back up online or disc-based memory is easily justified in large data processing systems, but for small systems the additional expense can be a significant percentage of the total system cost. In the case of personal computers, the cost of the tape storage unit is on the order of the cost of the personal computer. Therefore, personal computer users generally utilize inexpensive floppy discs for both backup storage and removable data storage. Backup storage con be effected by copying the original data onto floppy discs.

Hard discs having capacities between 20 and 80 times the capacity of floppy discs are also becoming increasingly utilized by personal computer users. Because it can be quite time consuming to copy data from a hard disc onto a set of floppy discs, it is advantageous to have a tape storage unit that is inexpensive relative to the cost of personal computers for large capacity, removable data storage. Such a device can be used for backup of online storage, distribution of software or databases, or as a low cost, slow access type of online storage.

A tape storage unit is known (EP-A-0 195 571) which utilizes the read/write head(s) of a disc drive to write data and/or to read data from a tape. This tape storage unit, referred to herein as the tape cartridge, contains a tape media for data storage, a mechanism to register the tape with respect to a predetermined location at which data is written onto the tape or is read from the tape by the read/write head(s) of the disc drive, a means for storing the tape media, and a mechanism to feed the tape past the read/write head(s).

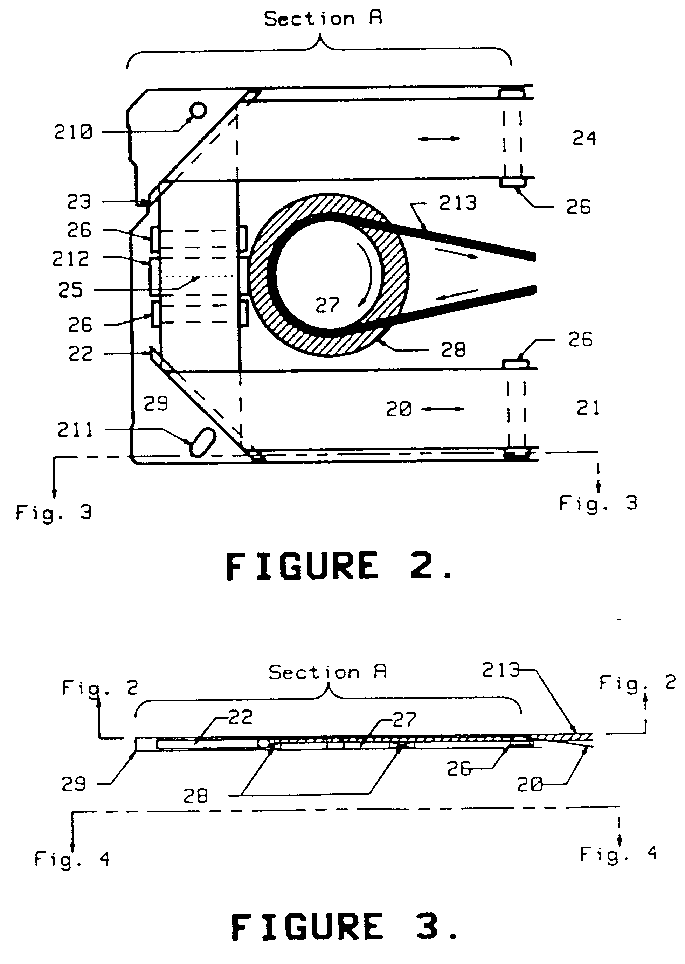

A portion of the tape cartridge referred to as Section A in Figures 2-4 has an external shape and size which allows that portion to be inserted into the disc drive to enable the tape to be placed in the vicinity of the read/ write head(s). For most disc drives, Section A has a disclike shape.

The tape media can be any media which is compatible with the read/write scheme of the disc drive with which the tape cartridge is to be utilized. For use with present generation floppy disc drives there must be used a magnetic tape with magnetic properties suitable for operation with the disc drive's magnetic read/write head(s). These tapes can include a backing layer to increase wear resistance, to reduce friction, and/or to reduce static electric charge.

For disc drives utilizing other schemes of recording materials such as magneto-optic media or optical discs, the tape should include a compatible type of recording material.

The mechanism to register the tape with respect to the read/write head(s) of the disc drive preferably comprises two components: (a) a mechanism to guide the tape and/or change the direction of the tape travel; and (b) a mechanism to align such guide mechanism with respect to some valid reference frame in the disc drive. This alignment mechanism assures that the tape is accurately positioned with respect to the read/write head(s) and is traveling along the correct path as it passes near the read/write head(s).

The tape media is stored on two spools or reels which alternately wind and rewind a length of tape. Read/write operations are either all in one direction, or in alternating directions depending upon the capabilities of the disc drive head(s). When the tape cartridge is used with a disc drive that will transfer data in either direction of tape travel, half of the tracks will be recorded in one direction and the other half will be recorded in the other direction, thereby eliminating the need to rewind the tape between data transfer on successive tracks. In disc drives that can only transfer data in one direction, the tape is rewound at the end of each track, the read/write head(s) are translated lateral to the tape feed direction to locate the head over the next track to be read or recorded, and then the data transfer process is continued.

The tape is driven by means of the disc drive spindle motor. That is, the disc drive spindle motor is utilized to move the tape past the read/write head(s) when the tape cartridge is inserted into the disc drive.

A clutching mechanism is required between the disc drive motor spindle and the spools or reels of tape. The main limitation on the clutching mechanism is its size because the size of the tape cartridge section which is inserted into the disc drive is constrained by the disc drive. The clutching mechanism should also be efficient and steady in transmitting power because of the fairly low power of typical disc drive spindle motors and because of the need to minimize perturbations in tape velocity and edge location as the tape moves past the read/write head(s).

In the known cartridge (EP-A 0 195 571) the clutching mechanism comprises a central clutch member having coupling teeth on its opposite faces.

The central clutch member is adapted to be axially shifted by means of a mechanical linkage in to one of the two coupling positions in which the teeth of the central clutch member cooporates with corresponding teeth at either of a pair of helical sliders, each of which is rotatably mounted on a shaft and connected by a torsion spring to an associated one of the two reels. When the coupling teeth are engaged the respective clutch means is locked in both directions of rotation.

The problem underlying the invention is to provide a cartridge according to the first part of claim 1 avoiding the mentioned difficulties associated with the mechanical linkage and the shifting movement of a clutch member as well as operation noise.

This problem is accomplished by claim 1.

Each reel is operably connected to and associated with one of the two unidirectional clutches, which enables the first reel to wind up tape while the second reel is unwound. When the linkage is driven in the opposite direction, the tape is wound onto the second reel while the first reel is unwound. Each clutching mechanism is adapted to drive the reel with which it is associated in one direction (i.e., in the direction required to wind tape onto such reel). When the tape is pulled off from the reel (i.e., the reel is being unwound), the clutch is adapted to slip so that it does not drive the reel at all.

For cartridges requiring reversal of tape direction, commands to reverse direction can be transmitted to the tape cartridge via the disc drive spindle.

Tape and disc drive devices typically have some feedback loops to adjust for variation in the speed of the media. Such feedback can adjust the speed of the media or can adjust the rate of reading and writing -- the feedback need only maintain the ratio between media speed and read/write rate at a substantially constant value. For example, in many disc drives, the disc drive controller adjusts the read rate in response to transitions on the disc. This disc drive controller will identically adjust the read rate in response to data transitions on the tape in the tape cartridge. Therefore, it is only necessary to ensure that the variations in the speed of the tape past the read/write head(s) are within the response limits of the disc drive controller's read/write rate feedback loop. To help assure this, parameters of the tape media, tape guidance system, and tape feeding system, can be selected to closely emulate the parameters of the associated disc.

The nature of the data stored on the tape is determined by the means with which the disc drive head(s) store data on a disc. If the read/write head(s) store data in a bit serial fashion, then data is stored on the tape in this way. Similar compatibility between the means of data storage on a disc, and on the tape in the tape cartridge would exist whether this means was data storage in a parallel fashion, with signal amplitude modulation, or with signal frequency modulation. Any data encoding schemes that the disc drive system uses in storing data on a disc (for example, MFM data encoding which is sometimes used to encode digital data onto magnetic discs) would be identically implemented with data stored on the tape in the tape cartridge.

Data formats, which describe how the data is organized on a disc or on the tape cartridge, include such parameters as number of data tracks, number of sectors per track, number of bytes per sector, sector header information, and extra coding for error detection. These parameters are set up by the disc drive's controller. A format for the tape, and other parameters which the disc drive controller uses, such as interleave factors, would not necessarily be identical to that of a disc. The primary difference is that the tape cartridge would need many more sectors per track and/or longer sectors to take advantage of the increased capacity of the tape media. Therefore, a means for temporarily changing these parameters in the disc drive controller when performing data storage with the tape cartridge is necessary for utilization of the increased capacity of the tape cartridge. These changes would be implemented either through software control via the host computer's operating system, or by changing a controller ROM which contains these parameters. The optimum means of doing this, and the specific parameters chosen, depends on the specific controller, operating system, and disc drive present.

Figure 1 is a standard 3.5 inch microfloppy disc cassette. This is the current media used to store data in a 3.5 inch microfloppy disc drive.

Figure 2 is a top view with cover removed of the portion of the tape cartridge (denoted as Section A) which fits inside a 3.5 inch microfloppy disc drive and which contains a means for registering the tape with respect to the disc drive heads.

Figure 3 is a side cross-sectional view of the embodiment shown in Figure 2.

Figure 4 is a bottom view of the embodiment shown in Figure 2.

Figure 5 is a top view with cover removed of one embodiment of the portion of the tape cartridge (denoted as Section B) for feeding and storing the tape media in the tape cartridge. This embodiment utilizes a length of tape with two ends, the tape being stored on two spools or reels.

Figure 6 is a top view with cover removed of one embodiment of tape cartridge of the invention.

Figure 6A is a sectional view of a tape cartridge taken along line 6A-6A in Figure 6.

Figure 7 is an elevational view showing one section of a clutching mechanism useful in the present invention.

Figure 8 is an elevational view showing the other section of a clutching mechanism which is adapted to cooperate with the clutch section illustrated in Figure 7.

Figure 9 is an edge view of the clutching mechanism formed by the sections illustrated in Figures 7 and 8.

Figure 10 illustrates another type of clutching mechanism which is useful in the present invention.

Figure 11 illustrates yet another type of clutching mechanism which is useful in the present invention.

Figure 12 is an end cut-away view illustrating another embodiment of data tape cartridge of this invention.

Different embodiments of data tape cartridges are shown in the drawings. The data tape cartridges of this invention may be constructed for any size disc drive, e.g., 3.5 inch microfloppy disc drive, 5 inch drive, 8 inch drive, etc.

Each embodiment of the invention includes a length of tape having two ends. The tape is stored on two spools or reels within the cartridge. As tape is unwound from one spool or reel, the tape is also being wound onto the other spool. This will be readily apparent from the following detailed description and the accompanying drawings.

The size of the spools or reels which can be used in the data tape cartridges of this invention may vary. For example, the diameter of each spool may vary from about 0.5 to 3 inches, as desired. The width of each spool will also vary to match the width of the tape which is used (e.g, 0.75 inch, 1 inch, etc.).

Normally the width of the tape to be used will be less than one inch. The length of the tape to be used in the cartridges of this invention may also vary, as desired.

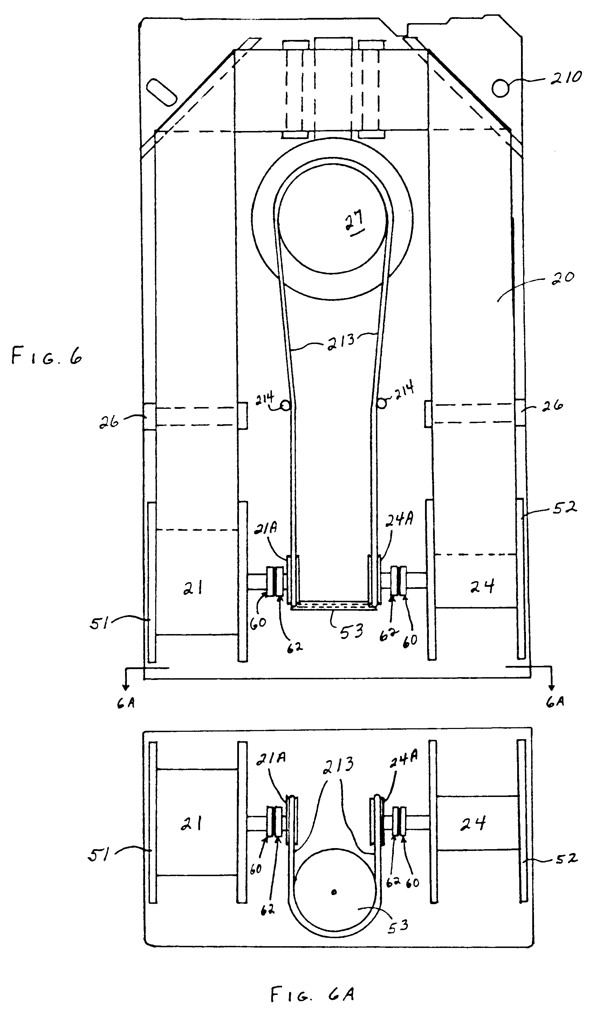

The section of the tape cartridge which registers the tape with respect to the disc drive heads, and is inserted into the disc drive to gain access to the heads, is shown in Figures 2-4 and is referred to as Section A. The section of the tape cartridge used to store and feed the tape is referred to as the feed/storage section. The feed/storage section in a tape cartridge embodiment utilizing a reversing length of tape is shown in Figure 5 and is referred to as Section B. Hence, the tape cartridge embodiment is comprised of Sections A and B.

In the following discussion, the same reference number will be utilized for the same element shown in more than one figure. It will be useful here to introduce some definitions for use in subsequent discussion. The "disc drive head" is the mechanism for reading and/or writing data on an associated data recording medium. The tape typically has a "length," "width," and "thickness" such that its length (typically several feet) is much greater than its width (on the other of 3/4 inch), and its width is much greater than its thickness (on the order of 0.0005 inch). Therefore, the tape can be viewed as a two dimensional surface extending in the direction of its length and width. "Feeding" a tape shall mean to translate it in the direction of its length. At a given point in the tape, the "plane of the tape" shall mean that plane that is tangent to this two dimensional surface at that point. A "tape guide" shall be any element which modifies the "plane of the tape" or the position of the edge of the tape as the tape feeds over the guide. If a tape guide modifies the plane of the tape such that the tape path is twisted around the tape guide, the tape guide shall be referred to as a "twist tape guide."

The tape media used is nominally .75 inches wide. This allows one of the disc drive heads to access 80 tracks, the maximum number used by standard 3.5 inch disc drives. The tape has a magnetic coating with a coercivity and thickness capable of supporting magnetic transitions written by the disc drive head at its normal data rate, at the speed which the tape is traveling. A back coating may be used if it provides benefits (e.g., reduced friction, increase wear resistance and/or reduce static electric charge) to the means for tape feed, storage or registration. If the tape is stored wrapped upon itself, this back coating must be non-magnetic to avoid print over. As 3.5 inch disc drives implement future increases in linear density due to changes in their head/media systems, the tape media may be changed in a similar manner to the disc media. This will allow the tape media to support identical increases in linear density, which will result in increased capacity and/or performance of the tape cartridge.

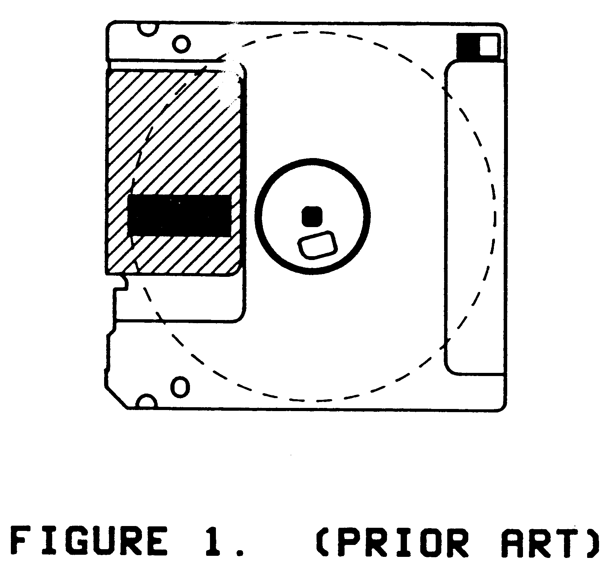

Figure 1 is a bottom view of a standard 3.5 inch microfloppy disc cassette. The dashed circle represents the disc media inside the cassette. The hatched area is an autoshutter. This is a protective cover that slides when the disc cassette is inserted into the disc drive, so an opening in the autoshutter is aligned with a matching opening in the cassette, allowing the disc drive heads to access the disc media. The shutter is shown in the open position. The half filled rectangle in the top right corner of the cassette in Figure 1 is a write protect switch. This switch position is read by a sensor in the disc drive, and allows the disc drive to recognize a write protected disc cassette.

Figure 2-4 show Section A of the tape cartridge. Because Section A is intended to fit inside a 3.5 inch microfloppy disc drive, its dimensions must be suitably close to those of a 3.5 inch microfloppy disc cassette (90 mm wide, 94 mm long, and 3.3 mm thick), so that it fits properly with the cassette loading mechanism of the disc drive. In general, this requires that Section A have a disclike shape suitable for fitting through the slot in the front of typical disc drives. The tape media 20 enters Section A from the tape supply location 21. Tape is fed from location 21 to twist tape guide 22, past a predetermined location L at which data is written onto or read from the tape by the disc drive head(s) (somewhere along dotted line 25), to twist tape guide 23, and then out of Section A to the tape taken-up location 24. In general, location L is the location at which reading and writing occur and in some disc drives, such as optical disc drives, may not be adjacent to the read/write head(s).

Because a finite length of tape is used (having two ends), the tape is fed from supply location 21 to take-up location 24. The supply and take-up then switch positions. This reverses the direction of the tape feed to rewind the tape. Once the tape is rewound, the supply and take-up revert to their original positions and the cycle is repeated. The means of this switching will be outlined in the discussion of Section B.

Twist tape guides 22 and 23 are oriented at nominally 45 degrees to the direction of feed of the tape. At each twist tape guide, the tape wraps substantially 180 degrees around the guide in a helical fashion, which changes the path of feed of the feed of the tape by 90 degrees and rotates the normal to the plane of the tape by 180 degrees. This manner of guiding the tape within Section A keeps the tape within a disclike region that has a size and shape that enable Section A to fit through the slot in the front of many typical disc drives. These guides enable the tape to enter Section A, gain proper access to location L, and exit Section A while remaining within the volume defined by Section A. In this manner, the tape passes across the disc drive heads, which are located along line 25, with a motion similar to that of the disc media.

Several other tape guides 26 provide a reference edge which acts to register the tape, and/or provide a wrap angle to change the plane of the tape. These tape guides 26 are in several locations: between tape supply location 21 and twist tape guide 22; between twist tape guides 22 and 23; and between twist tape guide 23 and tape take-up location 24. In instances where tape guide 26 provides a reference edge to register the tape, a force is exerted on the tape to constrain one of its edges to the reference edge of the tape guide 26. This force may be exerted on the tape either by deliberate misalignment of twist tape guides 22 and 23, by the shape of twist tape guides 22, 23 and/or tape guide 26, and/or by a spring loaded surface acting on the non-reference edge of the tape. All of the tape guides and drive elements which contact the tape are fabricated from a non-magnetic material such as non-magnetic stainless steel or a ceramic material.

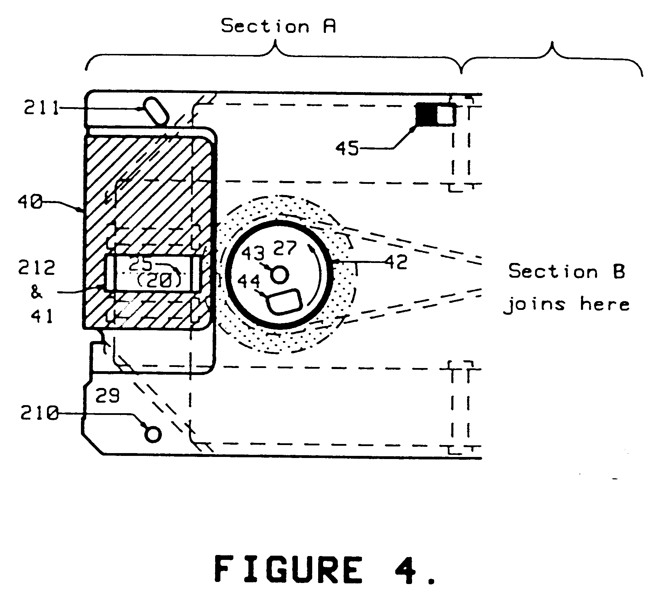

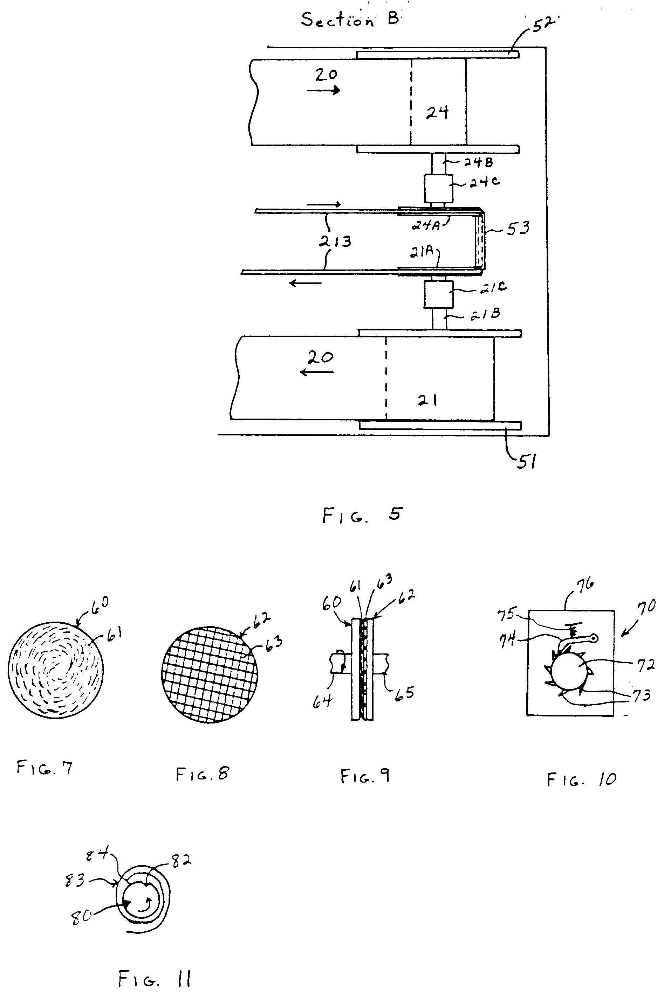

In the data tape cartridges of this invention, the power to feed the tape is derived from the disc drive spindle motor. As is illustrated in Figure 4, near the center of Section A is a cylindrical hub 27 containing a circular hole 43 at the center of the hub and a second hole 44 away from the center of the hub. When the tape cartridge is loaded into a 3.5 inch disc drive, hole 43 is located onto the circular shaft of the disc drive spindle motor. As the disc drive spindle motor rotates, a spring loaded pin from the motor hub assembly extends into hole 44. By this means, power from the disc drive spindle motor is transmitted to hub 27 in the tape cartridge. The tape cartridge is enclosed by a protective shell 29. A hole 42 in the lower surface of the protective shell 29 allows the spindle motor hub assembly to access hub 27. Openings 212 in both the upper and lower surfaces of shell 29 provide access to the tape along line 25 by the disc drive heads. These openings 212 are protected by a sliding piece 40 which contains opening 41 in its upper and lower surfaces. During use of the tape cartridge, sliding piece 40 is located such that openings 41 are positioned adjacent to openings 212. This sliding piece is essentially identical in appearance and function to the "auto shutter" on a 3.5 inch microfloppy disc cassette and movement of sliding piece 40 is effected in the same manner as for the auto shutter. A write protect switch 45 operates in a similar manner to the write protect switch of a disc cassette, and interacts identically with the sensor in the disc drive that determines the state of this switch. The protective shell also includes a rotary bearing 28 whose inner race rotates with hub 27 and whose outer race remains fixed, thereby isolating the rotary motion of hub 27 from the stationary part of the tape cartridge.

To ensure that the tape is accurately registered with the read/write heads, it is important that the tape cartridge be reproducibly aligned with some reference frame in the disc drive. In general, registration of the tape requires that the tape be fed past predetermined location L with an accurate positioning of the tape and a proper direction of feed of the tape. This is achieved by including within the tape cartridge a set of guide pins to accurately guide the tape within the tape cartridge and including some structure for accurately aligning the tape cartridge with the disc drive (and in particular, with location L). In the bottom of the protective shell of the microfloppy disc cassettes used in 3.5 inch microfloppy disc drives, there is a pair of holes that extend part way through the shell. When the microfloppy disc cassette is loaded into the disc drive, these holes fit over a pair of pins to partially control the vertical location of the disc cassette in the disc drive. These pins are suitable as both vertical and translational reference points in the disc drive for the purpose of aligning the tape cartridge. Therefore, the tape cartridge includes a pair of holes 210 and 211 in the bottom surface of the protective shell 29 that are positioned to fit over the pair of pins in the disc drive unit.

The slot shaped hole 211 provides a tight clearance fit over the associated pin in the disc drive. Holes 211 and 43 provide the angular and vertical reference for the tape cartridge. Hole 210 provides a loose clearance fit over the associated pin in the disc drive and provides only vertical reference for the tape cartridge. The remainder of the translational location is determined by the tight clearance fit of hole 43 to the disc drive spindle motor's circular shaft. Two additional pins located inside the disc drive near the disc drive's cassette opening also provide vertical support to either a microfloppy disc cassette or the tape cartridge.

Because the tape cartridge is reproducibly aligned to the disc drive via holes 43, 210 and 211, tape guides 22, 23 and 26 must be accurately positioned with respect to these registration holes. The runout of bearing 28 must also be accounted for in tolerance accumulation to ensure that tape 20 is accurately aligned with the disc drive heads.

In both embodiments shown, the disc drive spindle motor is used as a power source to feed the tape. Hub 27 contains a pulley which drives belt 213. Belt 213 is used to transmit power from hub 27 to the tape driving element in Section B.

A feed/storage section, denoted as Section B, utilizing a pair of supply/takeup spools or reels 51 and 52 is shown in Figure 5. One end of the tape media 20 is fixed onto spool 51, and the other is fixed onto spool 52. The tape media is alternately wound from one spool, that serves as a supply spool, through Section A, and onto the other spool, which serves as a take-up spool. In Figure 5, the tape supply location 21 is on spool 51, while spool 52 is being driven to act as the tape take-up location 24. This is the direction of tape travel in which data is written or read. If the disc drive head is capable of data transfer only when the media is traveling in one direction, then the other direction of tape travel is for rewind. If the disc head design allows for bi-directional data transfer, then both directions of tape travel will accommodate data transfer.

As illustrated in Figure 5, the flexible belt 213 driven by the disc drive spindle motor extends over pulley 21A, under and around idler pulley 53, and over pulley 24A. Pulley 21A is operably connected to tape spool or reel 51 by means of shaft 21B and clutching member 21C. Pulley 24A is operably connected to tape spool 52 by means of shaft 24B and clutching member 24C, as illustrated in Figure 5.

Thus, as belt 213 is driven in the direction indicated by the arrows, pulley 24A is rotated in a manner such that rotational energy is transmitted to spool 52 through clutch member 24C and shaft 24B. In this manner spool 52 is rotated such that tape 20 is wound onto spool 52. Simultaneously, tape is pulled from spool 51 at the same rate. Although pulley 21A is rotated in the opposite direction of pulley 24A, clutch member 21C is adapted to slip in this direction so that no rotational energy is imparted to spool 51 through clutch 21C and shaft 21B.

When belt 213 is driven in the opposite direction, pulley 21A is rotated in the opposite direction and rotational energy is transmitted to spool 51 through clutch 21C and shaft 21B. As a result, the tape 20 is wound upon spool 51 while tape is being pulled off spool 52. When that happens, clutch 24C slips.

Each clutch mechanism 21C and 24C is adapted to transmit rotational energy therethrough only when the associated shaft is driven in one direction. When the associated shaft is driven in the opposite direction, the clutch mechanism is adapted to slip.

The drive belt and pulley arrangement of the present invention for driving the spool alternately in one direction and then the other to move the tape past the read/write head of the disc drive has many advantages over the use of conventional gear systems. For example, gear systems are very noisy, and the gears must be manufactured with great precision. Also, when changing from driving one spool to driving the other spool there may be some resulting slack in the tape, which is very undesirable and could result in the tape being crimped or bound within the cartridge.

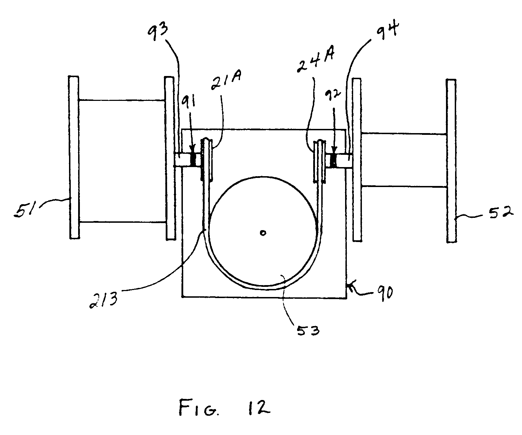

Clutch mechanisms having the functional characteristics described above are known in the art, for example. Figures 7, 8 and 9 illustrate one useful embodiment of a clutch mechanism which may be used in the tape cartridge of this invention.

Figure 7 is an elevational view of one-half 60 of the clutch mechanism in which one face has secured to it a fibrous pad member 61. The fibers on the surface of the pad project primarily in the same angular direction.

Figure 8 is an elevational view of the other half 62 of the clutch mechanism in which one face has secured to it a screen or mesh pad 63.

Figure 9 is an edge elevational view of the two clutch sections 60 and 62 in operational position, i.e., pad 61 and pad 63 are in face-to-face contact with each other. Also shown in Figure 9 is shaft 64 secured to clutch section 60 and shaft 65 secured to clutch section 62.

When shaft 64 is rotated in the direction indicated by the arrow, the fibers in pad 61 engage the mesh of pad 63 and cause clutch section 62 to rotate in unison with clutch section 60. However, when shaft 64 is rotated in the opposite direction, the fibers of pad 61 slip past mesh 63 and do not engage mesh 63.

Thus, the clutch mechanism illustrated in Figures 7, 8 and 9 is useful as a slip clutch in the present invention. Clutches of this type are commercially available, for example, from 3M Company under the tradename "Fibre-Tran".

Another type of slip clutch mechanism 70 useful in the present invention is illustrated in Figure 10. In this embodiment there is a rotatable shaft 72 having ratchet teeth 73 on its surface. Pawl member 74 is pivotably mounted at one end and is biased toward shaft 72 by spring member 75.

When shaft 72 is rotated in one direction the pawl 74 rides over and past teeth 73 and does not engage the shaft. When the shaft is rotated in the opposite direction the pawl member engages one of the teeth on the shaft and causes casing or housing 76 to rotate in unison with the shaft 72. A shaft secured to the opposite side of the housing can be made to rotate in this manner.

Another embodiment of slip clutch mechanism is illustrated in Figure 11. In this embodiment rotatable shaft 80 includes a detent or notch 82 on its surface. Spring member 83 encircles the shaft loosely. One end of the spring includes a finger 84 which is biased toward the surface of the shaft.

When the shaft is rotated in one direction the finger 84 of spring 83 will not become engaged with the notch or detent 82 in the shaft. However, when the shaft is rotated in the opposite direction (i.e., in the direction indicated by the arrow), finger 84 of spring 83 engages notch or detent 82 in shaft 80. Upon further rotation of shaft 80, the spring member 83 is caused to wrap around shaft 80 more tightly so that the spring grips the shaft. The other end of the spring is operably connected to another shaft which is accordingly caused to rotate when spring 83 engages shaft 80.

Other conventional types of slip clutches may also be used in the tape cartridges of this invention, so long as they function in the manner described herein. For example, another type of useful one-way or slip clutch which may be used is a conventional spring clutch comprising a coiled spring which is wrapped around a shaft with very close tolerance between the spring and the shaft. When the shaft is rotated in one direction the spring slips relative to the shaft (i.e., the spring does not engage the shaft). When the shaft rotates in the opposite direction the spring grips the shaft and becomes tighter. Connected to one end of the spring is a housing which may be connected to another shaft, or a pulley, or a tape reel, for example. Thus, when the spring grips the rotating shaft, the spring transmits the rotational motion to another shaft, or a pulley, or the tape reel.

Another embodiment of tape cartridge of the invention is illustrated in Figures 6 and 6A. In this embodiment the flexible endless belt extends around hub 27 (which is driven by the disc drive spindle motor), over pulley 24A, under idler pulley 53, and then over pulley 21A. To minimize oscillations and wobble in belt 213, idler 214 are positioned between hub 27 and pulleys 21A and 24A. The belt rides against these idler as it moves.

The clutch mechanisms shown in the embodiment of Figures 6 and 6A are that illustrated in Figures 7, 8 and 9. Thus, each clutch mechanism comprises clutch pad 60 and clutch pad 62. When pulley 21A is rotated in one direction the clutch pad 62 engages pad 60 and drives spool 51 in a rotational manner so as to wind the tape onto spool 51. When pulley 21A is rotated in the opposite direction pad 62 can slip past pad 60 and does not drive spool 51.

Similarly, when pulley 24A is rotated in one direction the associated clutch pad 62 engages clutch pad 60 and drives spool 52 in a rotational manner so as to wind the tape onto spool 52. When pulley 24A is rotated in the opposite direction clutch pad 62 slips past pad 60.

The clutch mechanisms used in the tape cartridges of this invention operate such that when one spool of tape is driven in a rotational manner so as to wind tape thereon, the tape is simultaneously unwound from the other spool.

Figure 12 is an end view which illustrates another embodiment of tape cartridge of this invention. In this embodiment a housing 90 (shown in cut-away) encloses the pulleys 21A and 24A, idler pulley 53, and the clutch mechanisms 91 and 92 associated with pulleys 21A and 24A, respectively.

Endless belt 213 passes into and out of the housing 90 through apertures on the opposite side of the housing. The shafts 93 and 94 on which spools 51 and 52 are carried are also supported by the housing 90, as illustrated.

## Claims

1. A magnetic tape cartridge for transferring data between a length of tape and a disc drive head in a disc drive, said magnetic tape cartridge comprising:
   a length of tape (20) having first and second ends and being cooperative with said disc drive head for transferring information between the disc drive head and the length of tape (20);
a first rotatable reel (51) onto which said length of tape (20) may be wound, said first end of said length of tape (20) being secured to said first rotatable reel (51);
a second rotatable reel (52) onto which said length of tape (20) may be wound, said second end of said length of tape (20) being secured to said second rotatable reel (52);
registration means (22,23,26,43,210,211) adapted to register a portion of said length of tape (20) with a predetermined location (25) at which data can be transferred between said length of tape (20) and said disc drive head;
first clutch means (21C) operatively connected to said first rotatable reel (51) for driving said first rotatable reel (51) in one direction,

second clutch means (24C) operatively connected to said second rotatable reel (52) for driving said second rotatable reel (52) in said one direction, and
reversible tape feeding means (27,213) coupled to said first and second clutch means (21C,24C) are operative for driving said first clutch means (21C) such that said length of tape (20) moves in a forward direction while said length of tape (20) is wound onto said first rotatable reel (51) and said reversible tape feeding means (27,213) are further operative for driving said second clutch means (24C) such that said length of tape (20) moves in a reverse direction while said length of tape (20) is wound onto said second rotatable reel (52),

**characterized** in that

said first and second clutch means (21C,24C) are formed by two separate unidirectional clutches, which are arranged in axially spaced and fixed relationship with regard to the respective reels (51,52) such that said clutches (21C,24C) allow said reels (51,52) to rotate freely in a direction opposite to said one direction.

2. A magnetic tape cartridge in accordance with claim 1, **characterized** in that said registration means comprises:
alignment means (43,210,211) for aligning said magnetic tape cartridge with said disc drive when said magnetic tape cartridge is inserted into said disc drive; and
guide means (22,23,26) for guiding said length of tape (20) within said magnetic tape cartridge such that said length of tape (20) is registered with said predetermined location (25) when said magnetic tape cartridge is aligned with said disc drive.

3. A magnetic tape cartridge in accordance with claim 1 or 2, further comprising a protective shell (29) enclosing said length of tape (20), said protective shell (29) having a bottom portion that includes therein at least two holes (43,210, 211) located such that, when the magnetic tape cartridge is inserted into the disc drive, each of the holes (210,211) fits over an associated one of two pegs in the disc drive for aligning the magnetic tape cartridge with the disc drive.

4. A magnetic tape cartridge as in claim 3, for use with a disc drive having a motor shaft, **characterized** in that one of said holes (43) in the bottom portion of said protective shell (29) is adapted to fit over the motor shaft, whereby the motor shaft functions as one of said two pegs utilized to align the magnetic tape cartridge with said predetermined location (25).

5. A magnetic tape cartridge as in one of the preceding claims, **characterized** in that said magnetic tape cartridge includes a Section A that is insertable into the disc drive, the Section A having a substantially planar region and containing a portion of said length of tape (20) in said substantially planar region.

6. A magnetic tape cartridge as in claim 5, **characterized** in that within Section A, the guide means comprises:
a plurality of twist tape guides (22,23), said length of tape (20) wrapping about each of said plurality of twist tape guides (22,23) by substantially 180 degrees to change the direction of feed of the length of tape (20) and to rotate the normal to the plane of the length of tape (20) by substantially 180 degrees so that the length of tape (20) feeds trough Section A within a disc-like region, whereby Section A has a disc-like shape suitable for insertion into said disc drive.

7. A magnetic tape cartridge in accordance with one of the preceding claims, **characterized** in that said reversible tape feeding means (27,213) comprises means for driving one of said first and second rotatable reels (51,52) so as to wind said length of tape (20) onto said one of said first and second rotatable reels (51,52) while said length of tape (20) is being unwound from the other of said first and second rotatable reels (51,52).

8. A magnetic tape cartridge in accordance with one of the preceding claims, **characterized** in that means for driving comprises an endless flexible belt (213) coupled to a disc drive motor.

9. A magnetic tape cartridge in accordance with one of claims 1 to 8, **characterized** in that each of said first and second clutch means (21C,24C) comprises a ratchet wheel (72,73) and a pawl (74), wherein said ratchet wheel (72,73) is adapted to rotate in one direction without engaging said pawl (74), and wherein said ratchet wheel (72,73) engages said pawl (74) when said ratchet wheel (72,73) is rotated in the opposite direction.

10. A magnetic tape cartridge in accordance with one of claims 1 to 8, **characterized** in that each of said first and second clutch means (21C,24C) comprises first and second sections (60,62), wherein said first section (60) includes a fibrous pad (61) and a second section (62) comprises a mesh layer (63), wherein said fibrous pad (61) of said first section (60) is adapted to engage said mesh layer (63) of said second section (62) when said first section (60) is rotated in one direction, and wherein said fibrous pad (61) is adapted to slip past said mesh layer (63) when said first section (60) is rotated in the opposite direction.

11. A magnetic tape cartridge in accordance with one of claims 1 to 8, **characterized** in that each of said first and second clutch means (21C,24C) comprises a rotatable shaft (80) having a detent (82) on its peripheral surface and a spring member (83) having a finger (84) on one end thereof;
said finger (84) is adapted to slip relative to said rotatable shaft (80) when said rotatable shaft (80) is rotated in one direction; and said finger (84) is adapted to engage said detent (82) when said rotatable shaft (80) is rotated in the opposite direction.

**Revendications**

1. Cassette de bande magnétique destinée au transfert de données entre un tronçon de bande et une tête d'une commande de disque, ladite cassette de bande magnétique comprenant :
    un tronçon de bande (20) ayant des première et seconde extrémités et destiné à coopérer avec ladite tête de commande de disque pour transférer l'information entre la tête de commande de disque et le tronçon de bande (20) ; une première bobine rotative (51) sur laquelle ledit tronçon de bande (20) peut être enroulé, ladite première extrémité dudit tronçon de bande (20) étant fixée à ladite première bobine rotative (51) ; une seconde bobine rotative (52) sur laquelle ledit tronçon de bande (20) peut être enroulé, ladite seconde extrémité dudit tronçon de bande (20) étant fixée à ladite seconde bobine rotative (52) ; des moyens de repérage (22, 23, 26, 43, 210, 211) destinés à mettre en coïncidence une partie dudit tronçon de bande (20) avec un emplacement prédéterminé (25) auquel des données peuvent être transférées entre ledit tronçon de bande (20) et ladite tête de commande de disque ; des premiers moyens d'embrayage (21C) reliés fonctionnellement à ladite première bobine rotative (51) pour entraîner ladite première bobine rotative (51) dans un sens, des seconds moyens d'embrayage (24C) reliés fonctionnellement à ladite seconde bobine rotative (52) pour entraîner ladite seconde bobine rotative (52) dans ledit un sens et des moyens reversibles d'avancement de la bande (27, 213) reliés auxdits premiers et seconds moyens d'embrayage (21C, 24C) et destinés à entraîner lesdits premiers moyens d'embrayage (21C) de manière que ledit tronçon de bande (20) se déplace dans un sens avant tandis que ledit tronçon de bande (20) est enroulé autour de ladite première bobine rotative (51), lesdits moyens reversibles d'avancement de la bande (27, 213) étant par ailleurs destinés à entraîner lesdits seconds moyens d'embrayage (24C) de manière que ledit tronçon de bande (20) se déplace en sens inverse tandis que ledit tronçon de bande (20) est enroulé sur ladite seconde bobine rotative (52), caractérisée en ce que lesdits premiers et seconds moyens d'embrayage (21C, 24C) sont formés de deux embrayages unidirectionnels indépendants qui sont axialement à distance l'un de l'autre et disposés en relation fixe par rapport aux bobines respectives (51, 52) de telle manière que lesdits embrayages (21C, 24C) permettent auxdites bobines (51, 52) de tourner librement dans un sens opposé audit un sens.

2. Cassette de bande magnétique selon la revendication 1, caractérisée en ce que lesdits moyens de repérage comprennent : des moyens d'alignement (43, 210, 211) pour aligner ladite cassette de bande magnétique sur ladite commande de disque lorsque ladite cassette de bande magnétique est introduite dans ladite commande de disque ; et
    des moyens de guidage (22, 23, 26) pour guider ledit tronçon de bande (20) à l'intérieur de ladite cassette de bande magnétique de manière que ledit tronçon de bande (20) soit en coïncidence avec ledit emplacement prédéterminé (25) lorsque ladite cassette de bande magnétique est à l'alignement de ladite commande de disque.

3. Cassette de bande magnétique selon la revendication 1 ou 2, comprenant par ailleurs un boîtier protecteur (29) enveloppant ledit tronçon de bande (20), ledit boîtier protecteur (29) ayant une partie de fond dans laquelle se trouvent au moins deux trous (43, 210, 211) placés de manière que, lorsque la cassette de bande magnétique est introduite dans la commande de disque, chacun des trous (210, 211) s'ajuste sur l'une correspondante de deux chevilles placées dans la commande de disque pour aligner la cassette de bande magnétique sur la commande de disque.

4. Cassette de bande magnétique selon la revendication 3, destinée à être utilisée avec une commande de disque équipée d'un arbre de moteur, caractérisée en ce que l'un desdits trous (43) de la partie du fond dudit boîtier protecteur (29) est destiné à s'ajuster sur l'arbre du moteur de sorte que l'arbre du moteur assume la fonction de l'une desdites deux chevilles utilisées pour aligner la cassette de bande magnétique sur ledit emplacement prédéterminé (25).

5. Cassette de bande magnétique selon l'une quelconque des revendications précédentes, caractérisée en ce que ladite cassette de bande magnétique comprend une section A qui peut s'introduire dans la commande de disque, la section A ayant une région sensiblement plane et logeant une partie dudit tronçon de bande (20) dans ladite région sensiblement plane.

6. Cassette de bande magnétique selon la revendication 5, caractérisée en ce que, dans la section A, les moyens de guidage comprennent :
    plusieurs guides (22, 23) provoquant un tordage de la bande, ledit tronçon de bande (20) s'enroulant autour de chacun desdits plusieurs guides (22, 23), qui en provoquent un tordage, sensiblement sur 180° de manière à modifier la direction d'avancement du tronçon de bande (20) et de faire tourner la normale au plan du tronçon de bande (20) d'environ 180°, de manière que le tronçon de bande (20) s'avance dans la section A à l'intérieur d'une région discoïdale, la section A ayant ainsi une forme discoïdale qui convient pour son introduction dans ladite commande de disque.

7. Cassette de bande magnétique selon l'une des revendications précédentes, caractérisée en ce que lesdits moyens reversibles d'avancement de la bande (27, 213) comprennent des moyens pour entraîner l'une desdites première et seconde bobines rotatives (51, 52) de manière à enrouler ledit tronçon de bande (20) sur ladite une desdites première et seconde bobines rotatives (51, 52) tandis que ledit tronçon de bande (20) se déroule de l'autre desdites première et seconde bobines rotatives (51, 52).

8. Cassette de bande magnétique selon l'une des revendications précédentes, caractérisée en ce que les moyens d'entraînement comprennent une courroie souple sans fin (213) reliée à un moteur de commande du disque.

9. Cassette de bande magnétique selon l'une des revendications 1 à 8, caractérisée en ce que chacun desdits premiers et seconds embrayages (21C, 24C) comprend une roue à rochet (72, 73) et un cliquet (74), ladite roue à rochet (72, 73) étant destinée à tourner dans un sens sans entrer en prise avec ledit cliquet (74) et ladite roue à rochet (72, 73) entrant en prise avec ledit cliquet (74) lorsque ladite roue à rochet (72, 73) tourne en sens opposé.

10. Cassette de bande magnétique selon l'une des revendications 1 à 8, caractérisée en ce que chacun desdits premiers et seconds moyens d'embrayage (21C, 24C) comprend des première et seconde sections (60, 62), ladite première section (60) comportant une semelle fibreuse (61) et une seconde section (62) consistant en une couche à mailles (63), ladite semelle fibreuse (61) de ladite première section (60) étant destinée à entrer en prise avec ladite couche à mailles (63) de ladite seconde section (62) lorsque ladite première section (60) est amenée à tourner dans un sens, ladite semelle fibreuse (61) étant destinée à glisser au-dessus de ladite couche à mailles (63) lorsque ladite première section (60) est amenée à tourner en sens opposé.

11. Cassette de bande magnétique selon l'une des revendications 1 à 8, caractérisée en ce que chacun desdit premiers et seconds moyens d'embrayage (21C, 24C) comprend un arbre rotatif (80) comportant un organe d'arrêt (82) sur sa surface périphérique ainsi qu'un élément élastique (83) comportant un ergot (84) à l'une de ses extrémités ; ledit ergot (84) étant destiné à glisser par rapport audit arbre rotatif (80) lorsque ledit arbre rotatif (80) est amené à tourner dans un sens ; et ledit ergot (84) étant destiné à s'enclencher sur ledit organe d'arrêt (82) lorsque ledit arbre rotatif (80) est amené à tourner en sens inverse.

**Patentansprüche**

1. Magnetbandkassette für die Datenübertragung zwischen einem Bandstück und einem Diskettenlaufwerkskopf in einem Diskettenlaufwerk, wobei die Magnetbandkassette aufweist:
   ein Bandstück (20) mit einem ersten und zweiten Ende, das mit dem Diskettenlaufwerkskopf zur Übertragung von Information zwischen dem Diskettenlaufwerkskopf und dem Bandstück (20) zusammenwirkt;
   eine erste drehbare Spule (51), auf die das Bandstück (20) gewickelt werden kann, wobei das erste Ende des Bandstückes (20) an der ersten drehbaren Spule (51) befestigt ist;
   eine zweite drehbare Spule (52), auf die das Bandstück (20) gewickelt werden kann, wobei das zweite Ende des Bandstückes (20) an der zweiten drehbaren Spule (52) befestigt ist;
   eine Aufzeichenvorrichtung (22, 23, 26, 43, 210, 211), die an einer vorgegebenen Stelle (25), an welcher Daten zwischen dem Bandstück (20) und dem Diskettenlaufwerkskopf übertragen werden können, einen Abschnitt des Bandstückes (20) aufzeichnen kann;
   eine erste Kupplung (21C), die wirkungsmäßig mit der ersten Spule (51) verbunden ist, um diese erste Spule (51) in eine Richtung anzutreiben, eine zweite Kupplung (24C), die wirkungsmäßig mit der zweiten drehbaren Spule (52) verbunden ist, um diese zweite drehbare Spule (52) in diese eine Richtung anzutreiben; und
   eine mit der ersten und der zweiten Kupplung (21C, 24C) gekoppelte umkehrbare Bandfördereinrichtung (27, 213), welche die erste Kupplung (21C) antreiben kann, so daß sich das Bandstück (20) in Vorwärtsrichtung bewegt, während dieses Bandstück (20) auf die erste drehbare Spule (51) gewickelt wird, und die weiterhin die zweite Kupplung (24C) antreiben kann, so daß sich das Bandstück (20) in entgegengesetzte Richtung bewegt, während das Bandstück (20) auf die zweite drehbare Spule (52) gewikkelt wird,

   dadurch **gekennzeichnet, daß**

   die erste und die zweite Kupplung (21C, 24C) von zwei getrennten, einsinnig wirkenden Kupplungen gebildet sind, die mit axialem Abstand und in festem Verhältnis zu den entsprechenden Spulen (51, 52) angeordnet sind, so daß die Kupplungen (21C, 24C) das freie Drehen der Spulen (51, 52) in eine der genannten einen Richtung entgegengesetzten Richtung zulassen.

2. Magnetbandkassette nach Anspruch 1, dadurch **gekennzeichnet,** daß die Aufzeichenvorrichtung aufweist:
   eine Ausrichtvorrichtung (43, 210, 211) zum Ausrichten der Magnetbandkassette mit dem Diskettenlaufwerk, wenn die Magnetbandkassette in das Diskettenlaufwerk eingebracht wird, und eine Führungsvorrichtung (22, 23, 26) zum Führen des Bandstückes (20) innerhalb der Magnetbandkassette, so daß das Bandstück (20) mit der vorgegebenen Stelle (25) aufgezeichnet wird, wenn die Magnetbandkassette auf das Diskettenlaufwerk ausgerichtet ist.

3. Magnetbandkassette nach Anspruch 1 oder 2, mit weiterhin einer das Bandstück (20) einschließenden Schutzhülle (29), die einen Bodenabschnitt mit mindestens zwei Löchern (43, 210, 211) aufweist, die so angeordnet sind, daß jedes der Löcher (210, 211) über einen oder zwei zugeordnete Zapfen im Diskettenlaufwerk paßt, um die Magnetbandkassette im Diskettenlaufwerk auszurichten, wenn die Magnetbandkassette in das Diskettenlaufwerk eingebracht wird.

4. Magnetbandkassette nach Anspruch 3, zur Verwendung in einem Diskettenlaufwerk mit einer Motorwelle, dadurch **gekennzeichnet,** daß eines der Löcher (43) im Bodenabschnitt der Schutzhülle (29) über die Motorwelle paßt, wobei die Motorwelle als einer der beiden Zapfen wirkt, die zum Ausrichten der Magnetbandkassette zu der vorgegebenen Stelle (25) dient.

5. Magnetbandkassette nach einem der vorangehenden Ansprüche, dadurch **gekennzeichnet,** daß die Magnetbandkassette einen Abschnitt A aufweist, der in das Diskettenlaufwerk einführbar ist, wobei der Abschnitt A einen im wesentlichen ebenen Bereich aufweist und einen Teil des Bandstückes (20) in diesem im wesentlichen ebenen Bereich enthält.

6. Magnetbandkassette nach Anspruch 5, dadurch **gekennzeichnet,** daß innerhalb des Bereiches A die Führungsvorrichtung aufweist:
   mehrere Bandwendeführungen (22, 23), wobei sich das Bandstück (20) um im wesentlichen 180 Grad um jede der mehreren Bandwendeführungen (22, 23) windet, um die Förderrichtung des Bandstückes (20) zu ändern und die Normale auf die Bandebene um im wesentlichen 180 Grad zu drehen, so daß das Bandstück (20) durch den Abschnitt A innerhalb eines diskettenähnlichen Bereiches geführt wird, wobei der Abschnitt A eine diskettenähnliche Form aufweist, die in das Diskettenlaufwerk eingeführt werden kann.

7. Magnetbandkassette nach einem der vorangehenden Ansprüche, dadurch **gekennzeichnet,** daß die umkehrbare Bandfördereinrichtung (27, 213) eine Vorrichtung zum Antreiben der ersten oder der zweiten drehbaren Spule (51, 52) aufweist, so daß das Band (20) auf die erste oder die zweite drehbare Spule (51, 52) gewikkelt wird, während das Band von der zweiten oder der ersten drehbaren Spule (51, 52) abgewickelt wird.

8. Magnetbandkassette nach einem der vorangehenden Ansprüche, dadurch **gekennzeichnet,** daß die Antriebsvorrichtung einen mit einem Diskettenlaufwerksmotor gekoppelten flexiblen Endlosriemen (213) aufweist.

9. Magnetbandkassette nach einem der Ansprüche 1 bis 8, dadurch **gekennzeichnet,** daß sowohl die erste als auch die zweite Kupplung (21C, 24C) ein Sperrrad (72, 73) und eine Sperrklinke (74) aufweisen, wobei das Sperrrad (72, 73) in eine Richtung drehen kann, ohne in die Sperrklinke (74) einzurasten, und das Sperrad (72, 73) in die Sperrklinke (74) einrastet, wenn es in die entgegengesetzte Richtung gedreht wird.

10. Magnetbandkassette nach einem der Ansprüche 1 bis 8, dadurch **gekennzeichnet,** daß sowohl die erste als auch die zweite Kupplung (21C, 24C) einen ersten und einen zweiten Abschnitt (60, 62) umfassen, und der erste Abschnitt (60) ein Faserpad (61) und der zweite Abschnitt (62) einen Kupplungsbelag (63) aufweisen, wobei das Faserpad (61) des ersten Abschnittes (60) mit dem Kupplungsbelag (63) des zweiten Abschnittes (62) kuppelnd zusammenwirken kann, wenn der erste Abschnitt (60) in eine Richtung dreht, und das Faserpad (61) relativ zum Kupplungsbelag (63) gleitet, wenn der erste Abschnitt (60) in die entgegengesetzte Richtung dreht.

11. Magnetbandkassette nach einem der Ansprüche 1 bis 8, dadurch **gekennzeichnet,** daß sowohl die erste als auch die zweite Kupplung (21C, 24C) eine drehbare Welle (80) mit einer Rastnase (82) an ihrer äußeren Oberfläche und einer Feder (83) mit einem Finger (84) an ihrem einem Ende aufweist,
der Finger (84) relativ zur drehbaren Welle (80) gleiten kann, wenn die drehbare Welle (80) in eine Richtung dreht, und
der Finger (84) in die Rastnase (82) einrastet, wenn die drehbare Welle in die entgegengesetzte Richtung dreht.

# FIGURE 1. (PRIOR ART)

Section A

210

23
26
212
25
26
22
211

24
26
213
26
27
28
29
20
21

26

Fig. 3

Fig. 3

# FIGURE 2.

Section A

Fig. 2

213

Fig. 2

22
27
29
28
26
20

Fig. 4

Fig. 4

# FIGURE 3.

FIGURE 4.

Section B

FIG. 5

FIG.7

FIG.8

FIG.9

FIG. 10

FIG. 11

16

FIG. 6

FIG. 6A

17

FIG. 12